# FASCICULE DE BREVET EUROPEEN

(11) **EP 1 520 318 B1**
(45) Date de publication et mention de la délivrance du brevet: **10.08.2016**
(21) Numéro de dépôt: 03760765.2
(22) Date de dépôt: 20.06.2003
(51) Int. Cl.: C08J 5/04, H01B 1/12, H01G 9/20, H01G 11/56, H01M 4/13, H01M 4/62, H01M 10/052, H01M 10/0565, H01M 8/10, H01G 9/022

(54) **MATERIAU A CONDUCTION IONIQUE RENFORCE, SON UTILISATION DANS LES ELECTRODES ET LES ELECTROLYTES**
VERSTÄRKTES IONENLEITENDES MATERIAL, DEREN ANWENDUNG IN ELEKTRODEN UND ELEKTROLYTEN
REINFORCED IONIC CONDUCTING MATERIAL, USE THEREOF IN ELECTRODES AND ELECTROLYTES

(30) Priorité: 21.06.2002 FR 0207746
(43) Date de publication de la demande: 06.04.2005
(73) Titulaire: Institut Polytechnique de Grenoble, 38031 Grenoble Cedex (FR); Centre National de la Recherche Scientifique, 75794 Paris Cedex 16 (FR)
(72) Inventeur: CAVAILLE, Jean-Yves, F-69004 Lyon (FR); DUFRESNE, Alain, F-38610 Gieres (FR); PAILLET, Michel, F-38100 Grenoble (FR); MY AHMED SAID, Azizi, Samir, Appt 3, no 003, F-38240 Meylan (FR); ALLOIN, Fannie, F-38220 Vizille (FR); SANCHEZ, Jean-Yves, Le Chaboud, F-38330 Saint Ismier (FR)
(74) Mandataire: Goulard, Sophie
(86) Numéro de dépôt international: PCT/FR2003/001908
(87) Numéro de publication internationale: WO 2004/001888

(56) Documents cités:
- EP-A- 1 031 598
- WO-A-95/23824
- DD-A- 284 475
- FR-A- 2 743 371
- US-A- 3 856 724
- US-A- 5 281 495
- US-A1- 2002 010 261

## Description

La présente invention concerne un matériau solide à conduction ionique renforcé par un matériau cellulosique ou une chitine, qui peut être utilisé comme électrolyte d'une batterie, d'une pile à combustible, d'un supercondensateur ou d'un dispositif électrochrome, ou comme constituant d'une électrode composite.

Dans un générateur dans lequel l'électrolyte est un film d'un matériau constitué par un sel facilement dissociable dissous dans un solvant polymère non plastifié, la diminution de la résistance interne du générateur peut être obtenue soit par une augmentation de la conductivité ionique de l'électrolyte polymère, soit par une diminution de l'épaisseur du film d'électrolyte. Les deux moyens précités sont antinomiques du fait que la conductivité ionique impose le choix de matrices polymères fonctionnelles permettant la dissolution du sel, la solvatation et la mobilité des ions. Les matrices polymères doivent de ce fait avoir le degré de cristallinité le plus faible possible dans la gamme des températures d'utilisation. Or une diminution du degré de cristallinité d'un polymère s'accompagne généralement d'une diminution de la tenue mécanique. Dans un électrolyte polymère, les chaînes macromoléculaires assurent la mobilité des anions et des cations. La mobilité des espèces ioniques augmente lorsque le degré de cristallinité et la température de transition vitreuse diminuent. Il apparaît ainsi qu'il est difficile d'optimiser les propriétés d'un électrolyte polymère.

Différentes solutions ont été envisagées pour améliorer la tenue mécanique de la matrice polymère. Ainsi on a diminué le degré de cristallinité du solvant polymère, notamment par utilisation de comonomères autres que l'oxyde d'éthylène [F. Alloin, et al., Electrochimica Acta, 40, 2269 (1995)] On a également utilisé une matrice polymère réticulée [F. Alloin, et al., J. of Electrochem. Soc., 141, 7,1915 (1994)]. On a également introduit dans la matrice polymère des charges sous forme de poudre ou de fibres (fibre de verre, de carbone, kevlar, alumine, silice). L'alumine et la silice n'apportent une amélioration que lorsque l'on utilise des oligomères. Les fibres de verre, de carbone ou de kevlar améliorent la tenue mécanique, mais ne permettent pas l'élaboration de films minces.

On connaît en outre l'utilisation de cellulose pour renforcer des polymères.

Par exemple, WO95/23824 décrit des matériaux composites constitués par des microfibrilles de cellulose dispersées dans une matrice polymère. Une dispersion aqueuse de microfibrilles est utilisée pour la préparation d'un latex renforcé. Dans les dispersions aqueuses, les microfibrilles jouent le rôle d'agent épaississant. Ces dispersions aqueuses sont utiles pour les peintures, les encres, les vernis, les compositions pour colles aqueuses et les revêtements de sol.

US-5,964,983 décrit la préparation de microfibrilles de cellulose notamment à partir de parenchyme (pulpe de betterave, de fruits et de légumes) ou de bois. L'une des propriétés citées pour les microfibrilles est leur aptitude à former des films et à renforcer d'autres matériaux, notamment des latex ou des composés thermoplastiques ou de l'acétate de cellulose. Ces microfibrilles sont utilisées comme agent épaississant pour des produits alimentaires ou pour des produits cosmétiques, comme agent améliorant l'opacité et l'uniformité du papier, ou comme agent améliorant la tenue mécanique du papier.

FR-2, 743,371 décrit une matrice polymère renforcée par des microfibrilles de cellulose enrobées par du polypyrrole. Des latex renforcés par dispersion des microfibrilles enrobées dans un milieu aqueux sont utilisés pour préparer des films composites qui sont résistifs ou capacitifs suivant la teneur en microfibrilles de cellulose enrobées. Les microfibrilles de cellulose enrobées présentent en outre une conductivité électronique inhérente au polypyrrole et cette propriété est transférée aux matériaux composites qui les contiennent.

polymères telles que les esters de cellulose (par exemple l'acétate de cellulose) et les polymères biodégradables tels que le polyhydroxybutyrate et le polyhydroxyvalérate.

EP-859011 décrit un procédé pour l'obtention de microfibrilles de cellulose cationiques ou leurs dérivés solubles, par réaction avec un sel d'ammonium quaternaire. Les composés ainsi obtenus peuvent être utilisés comme agent épaississant dans le domaine des peintures, des cosmétiques, dans l'industrie chimique, comme agent filmogène en papeterie, comme agent floculant dans le traitement des

FR-2,784,107 décrit la préparation de microfibrilles de cellulose modifiée en surface, et leur utilisation comme agent texturant ou charge de renfort. Les microfibrilles sont utilisées pour renforcer des matériaux thermoplastiques, des matériaux thermodurcissables ou des élastomères réticulés ou non. Les matériaux renforcés peuvent être utilisés pour l'élaboration d'un séparateur de batterie.

US 2002/0102610 décrit un matériau constitué par une matrice polymère pouvant servir de support à une solution liquide, notamment à une solution contenant une espèce ionique pour constituer un électrolyte acide ou basique, conférant au matériau une conduction ionique. La matrice polymère peut comprendre un homopolymère ou un copolymère d'un acide qui est soluble dans l'eau et qui a une insaturation éthylénique ou d'un dérivé d'un tel acide (e.g. un acide (méth)acrylique, un (méth)acrylate ou un acrylamide), un agent réticulant, éventuellement un initiateur de polymérisation, éventuellement une carboxyméthylcellulose et éventuellement une espèce ionique (hydroxyde de métal alcalin, hydroxyde acide, solution saturée de certains sels du type sulfate ou chlorure).

Le but de la présente invention est de fournir un matériau présentant une conduction ionique élevée, apte à former des films ayant une bonne tenue mécanique, ledit matériau étant particulièrement intéressant pour l'élaboration de l'électrolyte d'une batterie, d'une pile à combustible, d'un supercondensateur ou d'un dispositif électrochrome, ou comme constituant d'une électrode composite.

Le matériau à conduction ionique selon la présente invention comprend une matrice polymère, au moins une espèce ionique et au moins un agent de renforcement selon la revendication 1. Il est caractérisé en ce que :
- la matrice polymère est un polymère solvatant présentant éventuellement un caractère polaire, un polymère non solvatant portant des groupements ioniques acides, ou un mélange d'un polymère solvatant ou non et d'un liquide polaire aprotique ;
- l'espèce ionique est soit un composé ionique choisi parmi les sels et les acides, ledit composé étant en solution dans la matrice polymère, soit un groupement ionique anionique ou cationique fixé par liaison solution dans la matrice polymère, soit un groupement ionique anionique ou cationique fixé par liaison covalente sur le polymère, soit une association des deux ;
- l'agent de renforcement est un matériau cellulosique constitué par les monocristaux de cellulose généralement désignés par whiskers de cellulose, et les micro-fibrilles de cellulose.

La teneur en agent de renforcement du matériau composite est comprise entre 0,5% et 70% en poids, de préférence entre 1% et 10% en poids.

Lorsque la matrice polymère est constituée par un polymère solvatant, ledit polymère peut être choisi parmi les polymères solvatants réticulés ou non réticulés, qui portent éventuellement des groupes ioniques greffés. Un polymère solvatant est un polymère qui comporte des unités solvatantes contenant au moins un hétéroatome choisi parmi le soufre, l'oxygène, l'azote et le phosphore. A titre d'exemple de polymères solvatants, on peut citer :
- les homopolymères de type polyéther choisis parmi les poly(oxyéthylène), les poly(oxypropylène), les poly(oxytriméthylène), les poly(oxytétraméthylène) et les poly-(oxyméthylène)(oxyéthylène), lesdits homopolymères ayant une structure linéaire, une structure en peigne, une structure en étoile ou une structure en dendrimères ;
- les copolymères à bloc ou les copolymères greffés du type polyéther, formant ou non un réseau. Parmi ces copolymères à blocs, on peut citer ceux dans lesquels certains blocs portent des fonctions qui ont des propriétés rédox et/ou certains blocs possèdent des groupements réticulables ;
- les copolymères statistiques, aléatoires ou alternés contenant des unités récurrentes oxyalkylène, formant ou non un réseau. Parmi les unités oxyalkylène, on peut citer l'unité oxyéthylène, l'unité oxypropylène, l'unité 2-chlorométhyloxyéthylène, et l'unité oxyéthylèneoxyméthylène, qui proviennent respectivement de l'ouverture de cycle de l'oxyde d'éthylène, de l'oxyde de propylène, de l'épichlorhydrine et du dioxolane et qui sont particulièrement préférées. On peut citer en outre les unités oxyalkénylène qui proviennent de l'ouverture de cycle de l'époxyhexène, du vinylglycidyl éther, de l'allylglycidyl éther, d'acrylate de glycidyle ou méthacrylate de glycidyle ;
- les polyphosphazènes et les polysiloxanes porteurs de ramifications oligoéther ;
- les polycondensats linéaires préparés par exemple par réaction de Williamson entre des polyéthylène glycol et du dichlorométhane. De tels polycondensats sont décrits notamment par J.R. Craven et al MaKromol. Chem. Rapid Comm., 1986, 7, 81 ;
- les réseaux de polyéthylène glycol réticulé par des isocyanates ou les réseaux obtenus préparés à partir de polycondensats portant des groupements réticulables, tels que des doubles ou des triples liaisons, par exemple par une réaction de Williamson avec une dihalogénure insaturé tel que décrit par F. Alloin, et al., J. of Electrochem. Soc. 141,7, 1915 (1994) ;
- les réseaux préparés par réaction de polyéthylène glycol modifié par des fonctions amines terminales comme les produits commerciaux Jeffamine® et des isocyanates.

La matrice polymère peut être constituée par un polymère non-solvatant, polaire ou non, portant des groupes ioniques acides. Comme exemples de tels polymères, on peut citer les polymères qui portent des groupes alkylsulfoniques ou des groupes arylsulfoniques (par exemple les polysulfones sulfonées ou les polyétheréthercétones sulfonées), les polymères qui portent des groupes perfluorosulfoniques (par exemple le Nafion®) ou des groupes perfluorocarboxyliques. Une matrice polymère à groupe ioniques acides peut être utilisée à l'état hydraté ou sous forme d'une solution molaire dans un mélange eau-alcool.

La matrice polymère peut en outre être constituée par un mélange de polymère, solvatant ou non, et d'un liquide polaire aprotique. Le liquide polaire aprotique peut être choisi par exemple parmi les éthers linéaires et les éthers cycliques, les acétals linéaires et les acétals cycliques, les carbonates linéaires et les carbonates cycliques, les esters, les nitriles, les dérivés nitrés, les amides, les sulfones, les sulfolanes, les alkylsulfamides et les hydrocarbures partiellement halogénés. A titre d'exemple, on peut citer le diéthyléther, le diméthoxyéthane, les glymes, le tétrahydrofurane, le dioxolane, le dioxane, le diméthyltétrahydrofurane, le formiate de méthyle ou d'éthyle, le carbonate de propylène ou d'éthylène, les carbonates d'alkyle, les butyrolactones, l'acétonitrile, l'isobutyronitrile, le pivalonitrile, le benzonitrile, le nitrométhane, le nitrobenzène, la diméthylformamide, la diéthylformamide, la N-méthylpyrrolidone, la diméthylsulfone, la tétraméthylène sulfone et les tétraalkylsulfonamides ayant de 5 à 10 atomes de carbone, les urées cycliques. Le liquide polaire peut être un mélange de plusieurs solvants liquides miscibles. Lorsque le polymère est solvatant, il est choisi parmi ceux qui sont définis ci-dessus. Lorsque le polymère est non solvatant ou peu solvatant, il est choisi de préférence parmi les polymères possédant des groupes polaires et comprenant des unités contenant au moins un hétéroatome choisi parmi le soufre, l'azote, l'oxygène, le phosphore, le bore, le chlore et le fluor, par exemple les polymères qui contiennent principalement des unités dérivées du méthacrylonitrile, de l'acrylonitrile, du fluorure de vinylidène, de la N-vinylpyrrolidone, du vinyl imidazole, d'acrylates et de méthacrylates d'alkyle, de vinylsulfones ou de chlorure de vinyle. La teneur en liquide aprotique polaire dans la matrice polymère peut varier dans un large intervalle. Elle est de préférence telle que la teneur en liquide dans le matériau à conduction ionique soit comprise entre 5 et 98%, de préférence entre 30 et 90% en poids. Dans ce cas, la concentration en sel dans le liquide est entre 0,2 et 5 mole/litre, de préférence entre 0,8 et 1,2 mole/litre.

Les composés ioniques sont choisis parmi les sels de métaux alcalins, les sels de métaux alcalino-terreux, les sels de métaux de transition, les sels de terres rares et les sels de cations organiques ou organo-métalliques, ainsi que parmi les acides minéraux ou organiques. On préfère les sels et les acides dont l'anion a un caractère nucléophile le plus faible possible, c'est-à-dire les acides forts et leurs sels. On peut citer à titre d'exemple, l'acide perchlorique, l'acide phosphorique, les acides perfluorosulfoniques (notamment l'acide triflique), l'acide trifluorosulfonylimidure, l'acide tris(perfluorosulfonyl)méthane, les acides perfluorocarboxyliques, les acides arylsulfoniques, les perfluorosulfonimides, les arylsulfonimides, ainsi que leurs sels.

Lorsque le matériau à conduction ionique de l'invention est destiné à être utilisé pour l'élaboration d'une électrode composite d'une batterie, il contient en outre un matériau conducteur électronique et un matériau d'insertion. Le matériau conducteur électronique peut être du carbone, sous forme de tissu ou de poudre, par exemple le noir d'acétylène. Le matériau conducteur électronique peut être un polymère conducteur électronique intrinsèque tel que le polyacétylène, le polypyrrole, le polythiophène, le polyparaphénylène vinylène, la polyaniline, ou un mélange d'un polymère conducteur électronique intrinsèque et de noir d'acétylène. Le matériau conducteur électronique peut en outre être un polymère à conduction mixte, c'est-à-dire ionique et électronique, utilisé seul ou avec du carbone. Le matériau d'insertion peut en outre être un oxyde d'un métal (choisi par exemple parmi le cobalt, le nickel, le manganèse, le vanadium et le titane) ou un phosphate de fer ou un composé graphitique.

Lorsque le matériau selon l'invention est utilisé pour l'élaboration d'une électrode composite de pile à combustible, il contient en outre un conducteur électronique (qui peut être de même nature que précédemment) et une matière active agissant comme catalyseur, par exemple le platine ou un alliage de platine tel que platine/ruthénium.

Un matériau à conduction ionique selon l'invention peut contenir en outre les additifs conventionnels, par exemple des charges minérales ou organiques telles que par exemple de la silice de grade batterie.

Les matériaux de l'invention sont préparés à partir d'un agent de renforcement choisi parmi les matériaux cellulosiques d'un polymère ou de précurseurs d'un polymère portant ou non des groupements ioniques, et d'un composé ionique selon la revendication 1.

Pour la préparation d'un matériau renforcé par un composé cellulosique, on utilise des microfibrilles de cellulose ou des whiskers de cellulose.

Les whiskers de cellulose peuvent être obtenus à partir du tunicier Microcosmus Fulcatus, qui est un animal marin méditerranéen d'un diamètre total compris entre 5 et 10 cm avec une tunique de cellulose d'épaisseur 1 cm.

Les micro-fibrilles de cellulose peuvent être obtenues à partir de résidus de pulpe de betteraves, déchets de l'industrie agroalimentaire, par des traitements chimiques et physiques tels que décrits par A. Dufresne, et al., [Appl. Polym. Sci., 64, 1185-94, (1997)].

Le matériau composite selon l'invention peut être obtenu selon différents modes de réalisation, suivant la nature de la matrice polymère et suivant qu'elle porte ou non des groupements ioniques.

Selon un premier mode de préparation, on met en contact l'agent de renforcement avec le polymère en solution ou sous forme de latex en suspension, ou avec des précurseurs du polymère (oligomères ou monomères). Le réseau d'agent de renforcement se forme ensuite dans le matériau.

Dans une première variante du premier mode de réalisation, on mélange un polymère solvatant linéaire avec une dispersion d'agent de renforcement dans l'eau ou dans un mélange eau-solvant organique, on évapore l'eau et le solvant et l'on obtient un film de polymère renforcé par un réseau d'agent de renforcement. Parmi les polymères utilisables comme produit de départ, on peut citer en particulier un polymère linéaire tel que le poly (oxyéthylène) POE ou le poly(oxypropylène) POP, ou un copolymère linéaire tel que POE-co-PECH (polyépichlorhydrine) ou POE-co-POP, ou un polymère linéaire qui comprend des groupements ioniques greffés.

Dans une deuxième variante du premier mode de réalisation, on mélange un prépolymère à l'état non réticulé avec une dispersion d'agent de renforcement dans l'eau ou dans un mélange eau-solvant organique, on évapore l'eau et le solvant et l'on obtient un film de polymère renforcé par un réseau d'agent de renforcement. La réticulation du prépolymère peut être effectuée ensuite en soumettant le matériau à un traitement approprié. L'amorceur de réticulation a été ajouté soit à la dispersion initiale, soit après élimination de l'eau et du solvant. Comme exemple de prépolymère, on peut citer en particulier un copolymère d'oxyde d'éthylène et d'allyl-glycidyl éther à l'état non réticulé.

Dans une troisième variante du premier mode de réalisation, on introduit un ou plusieurs monomères et un amorceur approprié dans une dispersion d'agent de renforcement dans l'eau ou dans un mélange eau-solvant organique, on évapore l'eau et le solvant et l'on soumet le matériau obtenu à un traitement approprié pour former un polymère linéaire ou un réseau tridimensionnel.

Dans une quatrième variante, on met en forme le polymère fondu renforcé à partir d'un lyophilisat associant intimement le polymère et l'agent de renforcement.

Dans les quatre variantes ci-dessus,
- le sel conférant la conduction ionique peut être introduit en mettant en contact le matériau obtenu avec une faible quantité de solution concentrée en sel qui provoquer un gonflement de la matrice polymère ;
- le sel conférant la conduction ionique peut être introduit avec le polymère ou le précurseur de polymère sous forme d'une solution aqueuse.
- Lorsque l'agent de renforcement utilisé est soluble ou dispersible dans un solvant organique, il peut être mis en contact avec le polymère ou le précurseur de polymère sous forme d'une solution ou d'un lyophilisat contenant en outre le sel. Par exemple, une cellulose peut être rendue soluble par traitement des groupes hydroxyles. Ce traitement des groupes hydroxyles peut être par exemple une cyanoéthylation à l'aide d'un composé portant des groupes acrylonitriles, ou une estérification par un acide carboxylique, ou une éthérification, ou une silylation à l'aide du chlorotriméthylsilyle.
- Lorsque le polymère comprend des groupements ioniques en quantité suffisante, il n'est pas indispensable d'introduire un sel dans le matériau composite.

Dans une cinquième variante du premier mode de réalisation, on mélange un polymère polaire non solvatant linéaire avec une dispersion d'agent de renforcement dans l'eau ou dans un mélange eau-solvant organique contenant éventuellement un sel, on évapore l'eau et le solvant et l'on obtient un film de polymère renforcé par un réseau d'agent de renforcement. Parmi les polymères utilisables comme produits de départ, on peut citer les homopolymères ou les copolymères de méthacrylonitrile ou de fluorure de vinylidène. Après évaporation de l'eau et de l'éventuelle solvant organique et formation d'un film, on obtient un électrolyte polymère qui peut être utilisé à l'état sec ou que l'on peut faire gonfler par des liquides aprotiques polaires tels que par exemple les carbonates cycliques et acycliques, la gamma butyrolactone et la tétraéthylsulfonamide, ou par un électrolyte liquide contenant un ou plusieurs des solvants précités et un sel.

Selon un second mode de réalisation, on prépare un réseau d'agent de renforcement, puis on fait pénétrer le matériau polymère dans ledit réseau ou l'on élabore le matériau polymère au sein du réseau. Dans ce mode de réalisation, on forme un réseau d'agent de renforcement, puis on imprègne ce réseau par la matrice polymère élaborée au préalable sous forme solide, ou par un polymère sous forme liquide ou en solution dans un solvant, ou par des monomères précurseurs sous forme liquide ou en solution dans un solvant, ou par un mélange liquide d'un polymère et de monomères. Dans les différentes variantes, le polymère et/ou le précurseur de polymère contiennent éventuellement un composé ionique.

Le réseau d'agent de renforcement est obtenu par évaporation d'une suspension d'agent de renforcement dans l'eau, dans un mélange d'eau et de solvant organique, ou dans un solvant organique, l'agent de renforcement étant sous forme de monocristaux (whiskers) ou microfibrilles.

Dans le second mode de réalisation, l'imprégnation du réseau cellulosique par le polymère peut être effectuée selon plusieurs variantes.

Selon une première variante, l'imprégnation est faite par pressage à chaud. On prépare la matrice de polymère ou de prépolymère contenant un sel et/ou des groupements ioniques fixés par liaison covalente sous forme de film, puis l'on met en contact ledit film avec un réseau d'agent de renforcement sous forme de feuille et on soumet l'ensemble à un pressage à chaud. Si l'on utilise un prépolymère, on effectue ensuite un traitement de réticulation.

Selon une deuxième variante du second mode de réalisation, l'imprégnation est faite par une solution de polymère. On imprègne une feuille constituée par un réseau d'agent de renforcement par une solution d'un polymère ou d'un complexe polymère / sel, puis on évapore le solvant. Suivant que la solution de polymère contient un polymère linéaire, ou un prépolymère, on effectue après imprégnation de la feuille d'agent de renforcement, un traitement approprié en vue de réticuler le polymère.

Selon une troisième variante du second mode de réalisation, l'imprégnation est faite par une solution de monomère. On imprègne une feuille constituée par un réseau d'agent de renforcement par un monomère précurseur du polymère souhaité sous forme liquide ou sous forme d'une solution dans un solvant, éventuellement en présence d'un composé ionique, puis on évapore le solvant. On effectue ensuite, après imprégnation de la feuille d'agent de renforcement, un traitement approprié en vue de polymériser le monomère.

Dans ce mode de réalisation consistant à mettre en contact le polymère ou un précurseur du polymère avec une feuille constituée par un réseau d'agent de renforcement, on peut ajouter aux compositions utilisées pour l'imprégnation, un polymère linéaire de haute masse comme le POE ou le POP, ce qui, après la post-polymérisation conduira à un mélange (compatible ou non) composite ou à un réseau semi-interpénétré composite, selon la fonctionnalité des monomères de départ.

Quel que soit le mode de réalisation du procédé de préparation des matériaux composites selon l'invention, on peut ajouter un ou plusieurs plastifiants ou solvants permanents, qui resteront dans le film composite. Parmi ces constituants, on peut citer le carbonate d'éthylène, le carbonate de propylène, le sulfone, les tétraalkylsulfonamides et les polyéthylène glycols ayant de préférence une masse molaire inférieure à 1000 g/mole. Parmi lesdits polyéthylène glycols, on peut citer en particulier ceux dont les fonctions hydroxyles terminales ont été alkylées ou estérifiées, tels que par exemple le distéarate de polyéthylène glycol, ou les polyéthylènes mono-, di- ou triaminés tels que les produits commercialisés par la société Texaco sous la dénomination Jeffamine®.

Les matériaux à conduction ionique selon l'invention peuvent être utilisés avantageusement pour l'élaboration de l'électrolyte d'une batterie, d'une pile à combustible, d'un supercondensateur ou d'un dispositif électrochrome, ou pour l'élaboration d'une électrode composite. Il a été constaté que, de manière surprenante, l'introduction dans un matériau comprenant un polymère et un composé ionique qui a des propriétés de conduction ionique, d'un renfort fibreux dense tel qu'un matériau cellulosique selon la revendication 1 ne constituait pas un obstacle à la circulation des anions et des cations. Le renforcement de la tenue mécanique obtenue par ces agents de renforcement particuliers ne se fait pas au détriment des propriétés de conduction ionique. En outre, il a été constaté que, pour une amélioration de la tenue mécanique du même ordre de grandeur, la teneur en agent de renforcement selon l'invention était nettement inférieure à la teneur requise pour un agent de renforcement conventionnel tel que les fibres de verre par exemple.

Lorsque le matériau selon l'invention est destiné à être utilisé comme électrolyte pour une batterie lithium-polymère dont l'électrode négative est constituée par du lithium métallique, la matrice polymère est constituée de préférence par un copolymère unidimensionnel amorphe ou par un réseau polyéther tridimensionnel amorphe. Lorsque le matériau selon l'invention est destiné à être utilisé comme électrolyte pour une batterie lithium-ion polymère dont l'électrode négative est constituée par du graphite lithié, la conductivité est assurée par le liquide qui gonfle le polymère. Les matrices polymères utilisées dans ce cas sont de préférence des homo- et copolymères de fluorure de vinylidène, d'acrylonitrile, de méthacrylonitrile, d'acrylate d'alkyle, de méthacrylate d'alkyle ou d'oxyde d'éthylène. Les taux de gonflement massiques vont de 85 à 90%.

Un matériau selon l'invention peut être utilisé comme électrolyte d'une pile à combustible. Les piles à combustible concernées sont les piles à combustible à membrane dites PEMFC (Proton Exchange Membrane Fuel Cell) qui utilisent de l'hydrogène stocké en bouteille ou de l'hydrogène issu d'un reformage de méthanol, et les piles à combustible à méthanol direct dites DMFC (Direct Methanol Fuel Cell) qui utilisent le méthanol dans la solution d'électrolyte. Dans cette application, la matrice polymère est constituée de préférence par un polymère non-solvatant, polaire ou non, portant des groupes ioniques acides. Comme exemples de tels polymères, on peut citer les polymères qui portent des groupes alkylsulfoniques ou des groupes arylsulfoniques (par exemple les polysulfones sulfonées ou les polyétheréthercétones sulfonées), et les polymères qui portent des groupes perfluorosulfoniques (par exemple le Nafion®).

Un matériau à conduction ionique de la présente invention peut être utilisé comme électrolyte d'un supercondensateur. Un supercondensateur est constitué par une cellule électrochimique comprenant deux électrodes séparées par un électrolyte, dans laquelle le matériau constituant les électrodes présente une très grande aire spécifique (par exemple de 100 à 1500 m²/g). En fonctionnement, on obtient des capacités électrochimiques élevées, résultant de la charge de la double couche et de phénomènes d'adsorption ou de réactions rédox superficielles). Les densités de puissance obtenues sont très élevées. Pour cette application particulière, on choisit de préférence un matériau à conduction ionique selon l'invention dans lequel le composé ionique est un sel de lithium, et sel de tétraalkylammonium ou un composé acide.

Un matériau selon l'invention peut en outre être utilisé comme électrolyte dans un vitrage électrochrome. Un vitrage électrochrome est une cellule électrochimique comprenant deux électrodes séparées par un électrolyte. L'une des électrodes est une électrode transparente, l'autre électrode peut être constituée par exemple par un oxyde de tungstène WO₃ déposé sur un film d'oxyde d'étain ITO. Sous l'action d'un courant, la couleur de l'électrode WO₃ est modulée et passe de l'incolore au bleu foncé par insertion de protons. Pour cette application particulière on utilise de préférence un matériau à conduction ionique selon l'invention dans lequel le composé ionique est un acide, par exemple H₃PO₄.

Les cellules solaires convertissent la lumière en électricité. Une cellule solaire comprend une photoanode et une cathode séparée par un électrolyte, la photoanode portant un verre conducteur. Un matériau à conduction ionique selon l'invention peut également être utilisé comme électrolyte dans une cellule solaire.

La présente invention est décrite plus en détail par les exemples suivants, qui sont donnés à titre d'illustration et auxquels elle n'est pas limitée.

Les produits suivants ont été utilisés dans les exemples :
- des microfibrilles de cellulose obtenues à partir de résidus de pulpe de betteraves issus de l'industrie sucrière. Lesdits résidus contiennent environ 20% à 30% de cellulose sous forme de longues microfibrilles. Pour éliminer la partie non cellulosique, ces pulpes ont été traitées deux fois à la soude à 2%, puis blanchies deux fois au chlorite pour supprimer la lignine. La suspension obtenue a été homogénéisée dans un homogénéisateur de type Manton-Gaulin. Elle est alors stable, ne sédimente pas, et ne flocule pas. Une observation en microscopie électronique de transition (MET) montre que les micro-fibrilles sont soit individualisées avec des diamètres de 2 à 4 nanomètres, soit en faisceau de quelques dizaines d'éléments, avec des longueurs de plusieurs micromètres.
- des whiskers de cellulose obtenus sous forme d'une suspension aqueuse à partir de tunicier Microcosmus Fulcatus, selon le procédé suivant. Après anesthésie au chloroforme, l'animal est vidé et sa tunique est découpée en petits fragments qui sont déprotéinés par des traitements successifs de blanchiment, selon la méthode de Wise et al. [Pap. Trade J., 1946, 122, 35.] La tunicine résultante est ensuite désintégrée dans l'eau, tout d'abord avec un mixeur Waring (à une concentration de 5% en poids) et ensuite avec quinze passages à travers un homo-généiseur de laboratoire Gaulin utilisé à 400 bars (à une concentration de 1% en poids). La suspension aqueuse de tunicine est mélangée avec l'acide sulfurique pour atteindre une concentration finale acide/eau correspondant à une fraction massique de 55%. L'hydrolyse est effectuée à 60°C pendant 20 mn sous forte agitation. On obtient une suspension de whiskers de cellulose qui est traitée par ultrasons, neutralisée, puis lavée par dialyse ;
- un poly(oxyde d'éthylène) de masse molaire M_{w} = 5.10⁶ g/mol, désigné ci-après par POE ;
- un polyéthylène glycol de masse molaire 400 mg/mol, désigné ci-après par PEG400 ;
- un polyéthylèneglycol diméthyléther de masse molaire 500 mg/mol, désigné ci-après par PEGDME500 ;
- un polyéthylène glycol méthylméthacrylate de masse molaire 445 g/mol, désigné ci-après par PEGMM445 ;
- le trifluorométhanesulfonylimidure de lithium, désigné ci-après par LiTFSI.

### Exemple 1

Dans cet exemple, le POE a été utilisé sous forme d'une solution aqueuse à 5% en poids, et les whiskers ont été utilisés sous forme d'une suspension aqueuse à 0,5% en poids.

### Préparation de films

On a mélangé une solution de POE et une suspension de whiskers, puis on a maintenu la dispersion de PEO-whiskers obtenue sous agitation magnétique à 400 T/min à l'abri de la lumière pendant 24 heures. Ensuite, la dispersion a été dégazée lentement, puis coulée dans un moule en Téflon®. Le moule a ensuite été placé dans une étuve à 40°C pendant 48 heures, afin d'éliminer l'eau. Ensuite, le film a été détaché du moule et séché sous vide à 100°C sous vide pendant 24 h.

Différents essais ont été effectués, en ajustant les volumes de solution de PEO et de suspension de whiskers utilisés de manière à obtenir des films composites contenant différents pourcentages en volume de whiskers, à savoir 0% (à titre comparatif), 1%, 3%, 6%, 8%, 10%.

### Mesures de tenue mécanique

Les films obtenus ont été soumis à une Analyse Dynamique Mécanique aux petites déformations en traction. Les valeurs obtenues montrent que pour un taux de 8% en volume de whiskers, le réseau de whiskers est formé, car un module E' de 150 MPa est obtenu sur le plateau caoutchoutique jusqu'à une température de 180°C, alors que le module E' est de l'ordre de 1 Mpa pour le film à 0% de whiskers. Il apparaît ainsi que l'introduction de whiskers augmente de manière considérable les propriétés mécaniques des films sur une large gamme de températures (T>Tg).

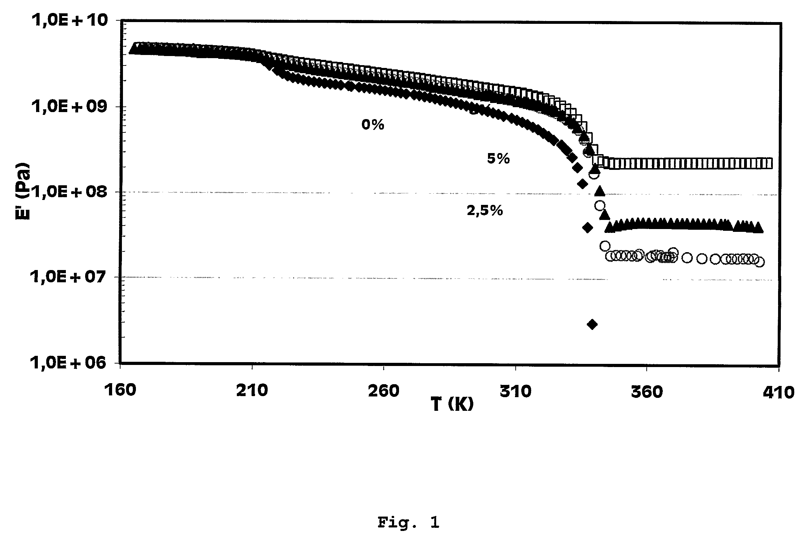

Des mesures mécaniques en torsion ont également été réalisées sur les films ayant une teneur en whiskers de 0%, 3% et 8% en volume. Le renfort mécanique est observé jusqu'à la température de fin d'expérience qui était de 140°C, avec un plateau pour le module G' à 5.10⁷ Pa pour les deux films contenant des whiskers, alors que le module G' chute fortement à la température de fusion du POE pour l'échantillon pur à 0% de whiskers. Ces résultats sont représentés sur la figure 1. Sur cette figure, le module G' est indiqué en ordonnée, et la température en degrés K est indiquée en abscisse.

### Mesures de conductivité

Des mesures de conductivité ont été réalisées sur deux films à x% de whiskers (x = 0 ou 8) . Un film à conduction ionique est préparé en faisant gonfler chaque film de POE-whiskers par une faible quantité de solution très concentrée de LiTFSI dans l'acétonitrile. Lorsque le film a absorbé toute la solution, on évapore le solvant, et la quantité de sel introduite est déterminée par pesée. (Dans un autre mode de réalisation, le sel pourrait être incorporé par immersion du film dans une solution concentrée en sel, la concentration en sel dans le film étant dans ce cas directement liée au temps de séjour dans la solution. Les solvants utilisés pour cette manipulation sont l'acétonitrile ou le diméthylcarbonate.)

Chacun des deux films ainsi préparés a été utilisé comme électrolyte dans une cellule électrochimique constituée par deux électrodes en acier inoxydable placées de part en d'autre du film. Pour le film PEO/8% whiskers/LiTFSI, une conductivité de 3.10⁻⁴ S/cm a été obtenue à 80°C pour une concentration en sel correspondant à un rapport O/Li=30. Pour cette même concentration en sel et à la même température, le film PEO/0% whiskers/LiTFSI a montré une conductivité de 3.5.10⁻⁴ S/cm, c'est-à-dire identique, aux incertitudes de mesure près. A 96°C le film PEO/8% whiskers/LiTFSI (O/Li=17), a une conductivité de 10⁻³ S/cm.

### Exemple 2

Dans cet exemple, le POE a été utilisé sous forme d'une solution à 5% en poids dans l'acétonitrile, et les whiskers ont été utilisés sous forme d'une suspension aqueuse à 0,5% en poids.

### Préparation de films

On a mélangé une solution de POE et une suspension de whiskers, puis on a maintenu la dispersion de PEO-whiskers obtenue sous agitation magnétique à 400 T/min à l'abri de la lumière pendant 24 heures. Aucune floculation des whiskers n'a été observée. Ensuite, la dispersion a été dégazée lentement, puis coulée sur un moule en Téflon®. Le moule a ensuite été placé dans une étuve à 40°C pendant 48 heures afin d'éliminer l'eau et l'acétonitrile. Ensuite, le film a été détaché du moule et séché sous vide à 100°C sous vide pendant 24 h.

Différents essais ont été effectués, en ajustant les volumes de solution de PEO et de suspension de whiskers utilisés de manière à obtenir des films composites contenant différents pourcentages en volume de whiskers, à savoir 0% (à titre comparatif), 1%, 3%, 6%, 8% et 10%.

### Mesures de tenue mécanique

Les films obtenus ont été soumis à une Analyse Dynamique Mécanique aux petites déformations en traction. Les valeurs obtenues montrent que pour un taux de 8% en volume de whiskers, le réseau de whiskers est formé, car un module E' de 150 MPa est obtenu sur le plateau caoutchoutique jusqu'à une température de mesure de 180°C.

### Exemple 3

Cet exemple illustre la préparation d'un film POE-whiskers sans solvants.

Une suspension de whiskers a été lyophilisée pour éliminer l'eau et l'on a obtenu des whiskers sous forme de poudre. Ces whiskers ont ensuite été mélangés au POE à l'état fondu, c'est-à-dire à une température de 80°C environ. La solution de whiskers dans POE liquide à 80°C a été coulée dans un moule. Après retour à la température ambiante, on a obtenu un film mince.

Les mesures mécaniques, obtenues par Analyse Dynamique Mécanique aux petites déformations en traction, montrent que pour un taux de 10% en volume de whiskers, le réseau de whiskers est formé, car un module E' de 50 MPa est obtenu sur le plateau caoutchoutique.

### Exemple 4

On a mélangé une solution aqueuse à 5% de POE et une suspension de whiskers à 0,1%. Ensuite, on a homogénéisé le mélange obtenu et on l'a lyophilisé jusqu'à élimination complète de l'eau. Différents essais ont été effectués, en ajustant les volumes de solution de PEO et de suspension de whiskers utilisés de manière à obtenir des films composites contenant différents pourcentages en volume de whiskers, à savoir 0% (à titre comparatif), 3%, 8%, 10%.

Le lyophilisat obtenu a été pressé à 90°C, sous une pression de 15 psi pendant 5 minutes pour former un film. Les mesures mécaniques, obtenues par Analyse Dynamique Mécanique en traction, donnent pour un taux de 8% en volume de whiskers, un module E' de 100 MPa.

L'avantage de cette technique est que l'eau est éliminée à basse température. On peut ainsi travailler avec des dispersion plus diluées, ce qui favorise l'homogénéité de la distribution du renfort cellulosique dans la matrice polymère.

### Exemple 5

Cet exemple illustre la préparation d'un matériau par imprégnation d'un réseau de matière cellulosique obtenu par évaporation.

Une suspension aqueuse de whiskers a été évaporée sous vide pendant 24 heures à 50°C, puis à 100°C. On a ainsi obtenu un film de whiskers de 10 microns d'épaisseur.

Des films de POE de 50 microns ont également été obtenus par évaporation d'une solution de POE dans l'acétonitrile.

La stratification des films de renfort et de matrice POE a été réalisée par un empilement des films selon la séquence (matrice/renfort)ₙ / matrice. L'indice n indique le nombre de films composites empilés. L'assemblage a été réalisé par pressage de l'empilement à 110°C sous une pression de 15 Psi pendant 5 min, puis maintien à une température de 110°C durant 20 min à la pression atmosphérique.

L'Analyse Dynamique Mécanique aux petites déformations en traction montre un plateau pour le module E' stable au-delà la température de fusion du POE. Ainsi, pour un film avec n = 2 où le taux de renfort est de 6%, le module de conservation E' est de 600 MPa à 80°C.

### Exemple 6

Cet exemple illustre la préparation d'un matériau à conduction ionique.

Des films de whiskers de 10 microns d'épaisseur ont été préparés par évaporation d'une suspension aqueuse de whiskers à 50°C, puis chauffage à 100°C sous vide pendant 24 h.

Des films de POE/LiTFSI de 50 microns d'épaisseur ont été obtenus par évaporation d'une solution de POE + LiTFSI dans l'acétonitrile en boîte à gants.

La stratification des films de renfort et de matrice POE/LiTFSI a été réalisée par un empilement des différents films selon la séquence (matrice/renfort)ₙ / matrice. L'assemblage a été réalisé par pressage des films à 110°C sous une pression de 15 psi pendant 5 min, puis maintien à une température de 110°C durant 20 min à la pression atmosphérique.

Le module E' obtenu sur le plateau caoutchoutique est de 10 MPa pour une concentration en sel O/Li=8 avec un taux de 0,6% de whiskers et de 80 MPa avec un taux de 4% de whiskers.

### Exemple 7

Le mode opératoire de l'exemple 6 a été reproduit, mais en ajoutant une petite quantité de PEGDME500 à la suspension aqueuse de whiskers avant la formation du film de whiskers.

Le module de conservation à 80 °C d'un film (matrice/renfort)₂/matrice plastifié par du PEGDME500 est de l'ordre de 80 MPa pour un taux de renfort de 4%.

### Exemple 8

Des films de whiskers de 10 microns d'épaisseur ont été préparés par évaporation à 50°C d'une suspension aqueuse de whiskers contenant PEGDME500, puis chauffage à 100°C sous vide pendant 24 h.

Une solution dégazée de POE + LiTFSI dans l'acétonitrile a été coulée sur un film de whiskers contenant entre 10% et 20% de PEGDME500 (par rapport au POE). L'acétonitrile a été évaporé en boîte à gant sous argon. Le film composite a ensuite été séché à 60°C sous vide pendant 12 heures.

Le film composite obtenu contient 24% de renfort et 10% de PEGDME500 pour une concentration en sel de O/Li=15, et présente une conductivité de 4.10⁻⁴ S/cm à 80°C.

### Exemple 9

Une dispersion aqueuse de POE / tétraglyme /Whiskers a été préparée par mélange d'une solution aqueuse à 1,5% de POE + tétraglyme et d'une suspension aqueuse de whiskers à 0,5%.

Différentes proportions de ces deux solutions ont été mélangées afin d'obtenir un film composite contenant divers pourcentages de whiskers, à savoir 1%, 3%, 6%, 10%. Après dispersion, la solution a été dégazée, puis coulée lentement sur un moule en Téflon®, qui a ensuite été mis dans une étuve à 40°C pendant 48 h, afin d'éliminer l'eau. Le séchage complet du film a été obtenu à 100°C sous vide pendant 24h.

Les mesures mécaniques, obtenues par Analyse Dynamique Mécanique aux petites déformations en torsion, donne pour un taux de 6% en volume de whiskers et 30% de tétraglyme un module G' de 15 MPa, constant sur le plateau caoutchoutique jusqu'à une température de mesure de 180°C.

### Exemple 10

Le mode opératoire de l'exemple 9 a été mis en oeuvre en remplaçant le tétraglyme par le PEGDME500.

Un module E' de 27 MPa a été obtenu pour un film composite POE+(10% PEGDME500)+8%Whiskers.

### Exemple 11

On a préparé une suspension aqueuse de whiskers et on y a dissous le PEGMM445 par agitation magnétique durant 4 h. On a ensuite ajouté le peroxyde d'acétylacétone qui agit en tant que catalyseeur de réticulation thermique.

La dispersion ainsi obtenue a ensuite été dégazée, puis coulée sur un moule en aluminium. Le moule a été placé dans une étuve à 40°C pendant 48 h pour évaporer l'eau, ensuite la polymérisation a été effectuée à 90°C pendant 24 h.

A 80°C, les modules de conservation des films de PEGMM445 obtenus renforcés par 6% de whiskers, sont de l'ordre de 100 MPa sur le plateau caoutchoutique. Un film avec 6% en poids de whiskers et un rapport O/Li = 12 présente une conductivité de 4.10⁻⁴ et 10⁻⁴ S.cm⁻¹ respectivement à 100°C et 84°C.

### Exemple 12

Des films constitués par des réseaux interpénétrés à base de POE et de PEGMM445 renforcés par des whiskers sont préparés comme suit.

Le PEGMM445 est mélangé au POE en poudre, le mélange est alors solubilisé dans une dispersion aqueuse de whiskers par agitation magnétique pendant 24 h. L'IRGACURE® utilisé comme photo-amorceur est ensuite ajouté. Après dégazage, la dispersion est coulée sur un moule en Téflon®. L'évaporation de l'eau est effectuée en plaçant le moule dans une étuve à 40°C pendant 48 h. La polymérisation est effectuée par exposition aux rayons UV durant 25 minutes à température ambiante. Le film obtenu est ensuite traité à 80°C pendant 4 h, puis à 100°C sous vide pendant 24 h.

Un film POE-PEGMM445 (2/3,1/3) avec 10% en poids de whiskers par rapport au POE ainsi obtenu présente une conductivité de 5,4.10⁻⁴ S.cm⁻¹ et de 4.10⁻⁴ S.cm⁻¹ respectivement à 102°C et 97°C, pour un rapport en sel O/Li =8.

Pour 33% de PEGMM445 et 10% de whiskers (par rapport à la masse du POE), le module de conservation est de l'ordre de 100 MPa à 80°C.

### Exemple 13

Un polycondensat linéaire LPC400 a été préparé selon un mode opératoire décrit par F. Alloin, et al., [J. of Electrochem. Soc. 141,7, 1915 (1994)] par une polycondensation de type Williamson entre le PEG400 et le 3-chloro-2-chlorométhyl propène. Une dispersion aqueuse de LPC400 - Whiskers a été préparée par mélange d'une solution aqueuse à 0,17g/ml de LPC400 et d'une dispersion aqueuse de whiskers à 0,5%. Différentes proportions de ces deux solutions sont mélangées afin d'obtenir un film composite contenant divers pourcentages de whiskers, à savoir 0% (à titre comparatif), 1%, 3%, 6%. Un agent de réticulation sous UV, l'IRGACURE est ajouté à 2% par rapport au nombre de mole de doubles liaisons du polycondensat. Après 12 heures sous agitation magnétique à 400 T/min à l'abri de la lumière, la dispersion est dégazée lentement, puis coulée sur un moule en aluminium, qui est ensuite placé dans une étuve à 40°C pendant 24 h, afin d'éliminer l'eau. Le film est alors réticulé par exposition pendant 10 minutes aux UV sous argon. Le séchage complet des film est obtenu par chauffage à 100°C sous vide pendant 24 heures.

Les mesures mécaniques, obtenues par Analyse Dynamique Mécanique aux petites déformations en traction, montrent que sans whiskers le module, sur le plateau caoutchoutique est de 0,5 MPa alors que pour un taux de 1% en volume de whiskers, un module E' de 2 MPa est obtenu sur le plateau caoutchoutique, ce module passant à 20 MPa et 100 MPa pour respectivement 3% et 6% de whiskers.

### Exemple 14

Une dispersion aqueuse de POE - microfibrilles est préparée par mélange d'une solution aqueuse à 1,5% de POE et d'une dispersion aqueuse de microfibrilles à 0,8%. Différentes proportions de la solution et de la dispersion sont mélangées afin d'obtenir un film composite contenant divers pourcentages de microfibrilles, à savoir 6%, 8%, 10%, 12%. Après 24 h sous agitation magnétique à 400 T/min à l'abri de la lumière, la dispersion est dégazée lentement, puis coulée sur un moule en Téflon, qui est ensuite placé dans une étuve à 40°C pendant 48 h, afin d'éliminer l'eau. Le séchage complet des films est ensuite obtenu à 100°C sous vide pendant 24h.

Les mesures mécaniques, obtenues par Analyse Dynamique Mécanique aux petites déformations en traction, montre que pour un taux de 8% (en volume) de microfibrilles, un module E' de 120 MPa est obtenu sur le plateau caoutchoutique jusqu'à une température de mesure de 180°C.

### Exemple 15

Une dispersion aqueuse de POE-LiTFSI-microfibrilles a été préparée par mélange d'une solution aqueuse à 1,5% de POE + LiTFSI telle que la concentration du sel soit égale à O/Li=20 (O/Li=rapport entre le nombre de mole d'unité oxyéthylène et le nombre de mole de sel) et d'une dispersion aqueuse de microfibrilles à 0,8%. Différentes proportions de la solution et de la dispersion ont été mélangées afin de préparer des films composites contenant divers pourcentages de microfibrilles, à savoir 6% et 10%. Après 24 h sous agitation magnétique à 400 T/min à l'abri de la lumière, la dispersion a été dégazée lentement, puis coulée dans un moule en Téflon, qui a ensuite été placé dans une étuve à 40°C pendant 48 h, afin d'éliminer le maximum d'eau. Le séchage complet des films a ensuite été obtenu à 100°C sous vide pendant 48 h.

Les mesures mécaniques, obtenues par Analyse Dynamique Mécanique aux petites déformations en traction, montrent que pour un taux de 10% (en volume) de microfibrilles, un module E' de 100 MPa est obtenu sur le plateau caoutchoutique jusqu'à la température de mesure de 180°C.

### Exemple 16

On a préparé des films de microfibrilles d'une épaisseur de 10 µm par lyophilisation d'une dispersion aqueuse de microfibrilles à 0,8%.

On a également préparés des films de POE de 50 microns par évaporation d'une solution de POE dans l'acétonitrile.

La stratification des films de renfort et de matrice POE a été réalisée par un empilement des films selon la séquence (matrice/renfort)ₙ / matrice. L'indice n indique le nombre de films composites empilés. L'assemblage a été réalisé par pressage de l'empilement à 110°C sous une pression de 15 Psi pendant 5 min, puis maintien à une température de 110°C durant 20 min à la pression atmosphérique.

Les mesures par Analyse Dynamique Mécanique aux petites déformations en traction, montre des plateaux pour le module E' stables au-delà la température de fusion du POE. Ainsi, pour un film avec n = 1 où le taux de renfort est de 10% en volume, le module de conservation E' est de 250 MPa à 100°C.

### Exemple 17

On a préparé une dispersion aqueuse d'un copolymère poly(méthacrylonitrile-co-hydroxyéthylméthacrylate) par mélange d'un latex à 95% en mole de méthacrylate de ce copolymère et d'une dispersion aqueuse de whiskers à 0,5%. Différentes proportions de ces deux constituants ont été mélangées afin d'obtenir des films composites contenant divers pourcentages de whiskers, à savoir 3%, 6%, 8%. Après 24 h sous agitation magnétique à 400 T/min à l'abri de la lumière, la dispersion est dégazée lentement, puis coulée sur un moule en Téflon. Le moule est ensuite traité dans une étuve à humidité contrôlée à 90°C pendant 5 jours, afin d'éliminer l'eau. Le séchage complet du film est obtenu par chauffage à 100°C sous vide pendant 24h.

Les mesures mécaniques, obtenues par Analyse Dynamique Mécanique aux petites déformations en traction, montre que pour un taux de 8% en volume de whiskers, le réseau de whiskers est formé, car un module E' de 100 MPa est obtenu, qui est stable au minimum jusqu'à 400K.

Les films composites ont été gonflés par un mélange d'électrolyte liquide carbonate d'éthyle/carbonate de propyle (1/1 en volume)contenant 1 mole/l de LiPF₆. Après absorption, le film comporte 80% d'électrolyte pour 20% de copolymère. Les mesures de conductivité montrent que l'on atteint la valeur de 1 mS/cm à 20°C. Les mesures mécaniques, obtenues par Analyse Dynamique Mécanique aux petites déformations en traction, donnent un module E' de 10 MPa à 100°C.

## Revendications

1. Matériau à conduction ionique comprenant une matrice polymère, au moins une espèce ionique et au moins un agent de renforcement, **caractérisé en ce que** :
- la matrice polymère est :
ou
u n polymère solvatant présentant éventuellement un caractère polaire choisi parmi :
- les homopolymères de type polyéther choisis parmi les poly(oxyéthylène), les poly(oxypropylène), les poly(oxytriméthylène), les poly(oxytétraméthylène) et les poly-(oxyméthylène)(oxyéthylène), lesdits homopolymères ayant une structure linéaire, une structure en peigne, une structure en étoile ou une structure en dendrimères ;
- les copolymères à bloc ou les copolymères greffés du type polyéther, formant ou non un réseau ;
- les copolymères statistiques, aléatoires ou alternés contenant des unités récurrentes oxyalkylène, formant ou non un réseau ;
- les polyphosphazènes et les polysiloxanes porteurs de ramifications oligoéther ;
- les polycondensats linéaires préparés par réaction de Williamson entre des polyéthylène glycol et du dichlorométhane ;
- les réseaux de polyéthylène glycol réticulé par des isocyanates ou les réseaux obtenus préparés à partir de polycondensats portant des groupements réticulables choisis parmi des doubles et des triples liaisons ; et
- les réseaux préparés par réaction de polyéthylène glycol modifié par des fonctions amines terminales et des isocyanates ;
ou
u n polymère non solvatant portant des groupements ioniques acides choisis parmi les groupes alkylsulfoniques, les groupes arylsulfoniques, les groupes perfluorosulfoniques et les groupes perfluorocarboxyliques ; ou
ou
u n mélange d'un polymère solvatant ou non et d'un liquide polaire aprotique ;
- l'espèce ionique est soit un composé ionique choisi parmi les sels et les acides, ledit composé étant en solution dans la matrice polymère, soit un groupement ionique anionique ou cationique fixé par liaison covalente sur le polymère, soit une association des deux ;
- l'agent de renforcement est un matériau cellulosique constitué par des monocristaux de cellulose ou par des microfibrilles de cellulose.

2. Matériau à conduction ionique selon la revendication 1, **caractérisé en ce que** la teneur en agent de renforcement est comprise entre 0,5% et 70% en poids.

3. Matériau à conduction ionique selon la revendication 2, **caractérisé en ce que** la teneur en agent de renforcement est comprise entre 1% et 10% en poids.

4. Matériau à conduction ionique selon la revendication 1, **caractérisé en ce que** la matrice polymère est constituée par un polymère solvatant réticulé ou non réticulé.

5. Matériau à conduction ionique selon la revendication 4, **caractérisé en ce que** le polymère solvatant porte des groupes ioniques greffés.

6. Matériau à conduction ionique selon la revendication 1, **caractérisé en ce que** la matrice polymère est constituée par un polymère non-solvatant portant des groupes ioniques acides.

7. Matériau à conduction ionique selon la revendication 1, **caractérisé en ce que** la matrice polymère est constituée par un mélange de polymère, solvatant ou non, et d'au moins un liquide polaire aprotique.

8. Matériau à conduction ionique selon la revendication 7, **caractérisé en ce que** le liquide polaire aprotique est choisi parmi les éthers linéaires et les éthers cycliques, les acétals linéaires et les acétals cycliques, les carbonates linéaires et les carbonates cycliques, les esters, les nitriles, les dérivés nitrés, les amides, les sulfones, les sulfolanes, les alkylsulfamides et les hydrocarbures partiellement halogénés.

9. Matériau à conduction ionique selon la revendication 7, **caractérisé en ce que** le polymère est un polymère non solvatant choisi parmi les polymères qui possèdent des groupes polaires et qui comprennent des unités contenant au moins un hétéroatome choisi parmi le soufre, l'azote, l'oxygène, le phosphore, le bore, le chlore et le fluor.

10. Matériau à conduction ionique selon la revendication 1, **caractérisé en ce que** le composé ionique est choisi parmi les acides forts et parmi les sels de métaux alcalins, de métaux alcalino-terreux, de métaux de transition, de terres rares, de cations organiques et de cations organométalliques desdits acides.

11. Matériau à conduction ionique selon la revendication 10, **caractérisé en ce que** le composé ionique est choisi parmi l'acide perchlorique, l'acide phosphorique, les acides perfluorosulfoniques, l'acide trifluorosulfonylimidure, l'acide tris(perfluorosulfonyl)méthane), les acides perfluorocarboxyliques, les acides arylsulfoniques, les perfluorosulfonimides et les arylsulfonimides, et parmi les sels desdits acides.

12. Matériau à conduction ionique selon la revendication 1, **caractérisé en ce qu'**il contient en outre un matériau conducteur électronique et un matériau d'insertion.

13. Matériau à conduction ionique selon la revendication 12, **caractérisé en ce que** le matériau conducteur électronique est choisi parmi :
- le carbone, sous forme de tissu ou de poudre,
- les polymères conducteurs électroniques intrinsèques,
- les mélanges d'un polymère conducteur électronique intrinsèque et de noir d'acétylène,
- les polymères à conduction mixte, c'est-à-dire ionique et électronique utilisés seuls ou avec du carbone.

14. Matériau à conduction ionique selon la revendication 12, **caractérisé en ce que** le matériau d'insertion est un oxyde d'un métal choisi parmi le cobalt, le nickel, le manganèse, le vanadium et le titane, ou un phosphate de fer ou un composé graphitique.

15. Electrode pour batterie constituée par un matériau composite, **caractérisée en ce que** le matériau composite est un matériau selon l'une des revendications 12 à 14.

16. Matériau à conduction ionique selon la revendication 1, **caractérisé en ce qu'**il contient en outre un matériau conducteur électronique et une matière active agissant en tant que catalyseur.

17. Matériau à conduction ionique selon la revendication 16, **caractérisé en ce que** le matériau conducteur électronique est choisi parmi :
- le carbone, sous forme de tissu ou de poudre,
- les polymères conducteurs électroniques intrinsèques,
- les mélanges d'un polymère conducteur électronique intrinsèque et de noir d'acétylène,
- les polymères à conduction mixte, c'est-à-dire ionique et électronique utilisés seuls ou avec du carbone.

18. Matériau à conduction ionique selon la revendication 16, **caractérisée en ce que** la matière active est le platine ou un alliage de platine.

19. Electrode pour pile à combustible, constituée par un matériau composite, **caractérisée en ce que** le matériau composite est un matériau selon l'une des revendications 16 à 18.

20. Electrolyte pour une batterie lithium-polymère dont l'électrode négative est constituée par du lithium métallique, **caractérisé en ce qu'**il est constitué par un matériau selon la revendication 1.

21. Electrolyte pour une batterie lithium-polymère selon la revendication 20, **caractérisé en ce que** la matrice polymère du matériau à conduction ionique est constituée par un copolymère unidimensionnel amorphe ou par un réseau polyéther tridimensionnel amorphe.

22. Electrolyte pour une batterie lithium-polymère dont l'électrode négative est constituée par du graphite lithié, **caractérisé en ce qu'**il est constitué par un matériau selon la revendication 1.

23. Electrolyte pour une batterie lithium-polymère selon la revendication 22, **caractérisé en ce que** la matrice polymère du matériau à conduction ionique est un homo- ou un copolymère de fluorure de vinylidène, d'acrylonitrile, de méthacrylonitrile, d'acrylate d'alkyle, de méthacrylate d'alkyle ou d'oxyde d'éthylène.

24. Electrolyte d'une pile à combustible à membrane, **caractérisé en ce qu'**il est constitué par un matériau à conduction ionique selon la revendication 1.

25. Electrolyte d'une pile à combustible selon la revendication 24, **caractérisé en ce que** la matrice polymère est constituée par un polymère non-solvatant, polaire ou non, portant des groupes ioniques acides.

26. Electrolyte d'une pile à combustible selon la revendication 24, **caractérisé en ce que** le polymère porte des groupes alkylsulfoniques ou des groupes arylsulfoniques ou des groupes perfluorosulfoniques.

27. Cellule solaire comprenant une photoanode et une cathode séparée par un électrolyte, la photoanode portant un verre conducteur, **caractérisée en ce que** l'électrolyte est un matériau à conduction ionique selon la revendication 1.

28. Supercondensateur, constitué par une cellule électrochimique comprenant deux électrodes séparées par un électrolyte, **caractérisé en ce que** l'électrolyte est un matériau à conduction ionique selon la revendication 1, dans lequel le composé ionique est un sel de lithium ou de tétraalkylammonium, ou un acide.

29. Vitrage électrochrome comprenant deux électrodes séparées par un électrolyte, **caractérisé en ce que** l'électrolyte est un matériau à conduction ionique selon la revendication 1, dans lequel le composé ionique est un acide.

## Patentansprüche

1. Ionenleitendes Material, umfassend eine Polymermatrix, mindestens eine ionische Spezies und mindestens ein Verstärkungsmittel, **dadurch gekennzeichnet, dass**:
- die Polymermatrix ist:
entweder
- ein solvatisierendes Polymer, das eventuell einen polaren Charakter aufweist, ausgewählt aus:
- den Homopolymeren vom Typ Polyether, ausgewählt aus dem Poly(oxyethylen), dem Poly(oxypropylen), dem Poly(oxytrimethylen), dem Poly(oxytetramethylen) und dem Poly(oxymethylen)(oxyethylen), wobei die Homopolymere eine Linearstruktur, eine Kammstruktur, eine Sternstruktur oder eine Dendrimerstruktur haben,
- den Block-Copolymeren oder den gepfropften Copolymeren vom Typ Polyether, netzbildend oder nicht,
- den statistischen, aleatorischen oder alternierten Copolymeren, die rekurrente Oxyalkylen-Einheiten enthalten, netzbildend oder nicht,
- den Polyphosphazenen und den Polysiloxanen als Träger von Oligoetherverzweigungen,
- den linearen Polykondensaten, hergestellt durch Williamson-Reaktion zwischen Polyethylenglycol und Dichlormethan,
- den Polyethylenglycolnetzen, vernetzt durch Isocyanate, oder den Netzen, erhalten aus Polykondensaten, die vernetzbare Gruppen tragen, ausgewählt aus Doppelt- und Dreifachbindungen, und
- den Netzen, hergestellt durch Reaktion von durch terminale Aminfunktionen und Isocyanate modifiziertem Polyethylenglycol,
oder
- ein nicht solvatisierendes Polymer, das saure Ionengruppen trägt, die aus den Alkylsulfongruppen, den Arylsulfongruppen, den Perfluorsulfongruppen und den Perfluorcarboxylgruppen ausgewählt sind, oder
oder
- ein Gemisch eines Polymers, solvatisierend oder nicht, und einer aprotischen polaren Flüssigkeit,
- die ionische Spezies entweder eine Ionenverbindung, ausgewählt aus den Salzen und den Säuren, ist, wobei die Verbindung in der Polymermatrix als Lösung vorliegt, oder eine anionische oder kationische Ionengruppe, die durch kovalente Bindung auf dem Polymer fixiert ist, oder eine Kombination beider,
- das Verstärkungsmittel ein Zellulosematerial ist, das von Zellulose-Monokristallen oder von Zellulose-Mikrofribrillen gebildet ist.

2. Ionenleitendes Material nach Anspruch 1, **dadurch gekennzeichnet, dass** der Gehalt an Verstärkungsmittel zwischen 0,5 % und 70 % Gew.-% inklusive beträgt.

3. Ionenleitendes Material nach Anspruch 2, **dadurch gekennzeichnet, dass** der Gehalt an Verstärkungsmittel zwischen 1 % und 10 % Gew.-% inklusive beträgt.

4. Ionenleitendes Material nach Anspruch 1, **dadurch gekennzeichnet, dass** die Polymermatrix von einem vernetzten oder nicht vernetzten solvatisierenden Polymer gebildet ist.

5. Ionenleitendes Material nach Anspruch 4, **dadurch gekennzeichnet, dass** das solvatisierende Polymer gepfropfte Ionengruppen trägt.

6. Ionenleitendes Material nach Anspruch 1, **dadurch gekennzeichnet, dass** die Polymermatrix von einem nicht solvatisierenden Polymer gebildet ist, das saure Ionengruppen trägt.

7. Ionenleitendes Material nach Anspruch 1, **dadurch gekennzeichnet, dass** die Polymermatrix von einem Polymergemisch, solvatisierend oder nicht, und von mindestens einer aprotischen polaren Flüssigkeit gebildet ist.

8. Ionenleitendes Material nach Anspruch 7, **dadurch gekennzeichnet, dass** die aprotische polare Flüssigkeit aus den linearen Ethern und den zyklischen Ethern, den linearen Acetalen und den zyklischen Acetalen, den linearen Carbonaten und den zyklischen Carbonaten, den Estern, den Nitrilen, den Nitroderivaten, den Amiden, den Sulfonen, den Sulfolanen, den Alkylsulfamiden und den teilweise halogenierten Kohlenwasserstoffen ausgewählt ist.

9. Ionenleitendes Material nach Anspruch 7, **dadurch gekennzeichnet, dass** das Polymer ein nicht solvatisierendes Polymer ist, das aus den Polymeren ausgewählt ist, die polare Gruppen besitzen und die Einheiten umfassen, die mindestens ein Heteroatom enthalten, das aus dem Schwefel, dem Stickstoff, dem Sauerstoff, dem Phosphor, dem Bor, dem Chlor und dem Fluor ausgewählt ist.

10. Ionenleitendes Material nach Anspruch 1, **dadurch gekennzeichnet, dass** die ionische Verbindung aus den starken Säuren und aus den Salzen alkalischer Metalle, erdalkalischer Metalle, von Übergangsmetallen, seltenen Erden, organischen Kationen und organo-metallischen Kationen der Säuren ausgewählt ist.

11. Ionenleitendes Material nach Anspruch 10, **dadurch gekennzeichnet, dass** die ionische Verbindung aus der Perchlorsäure, der Phosphorsäure, den Perfluorsulfonsäuren, der Trifluorsulfonylimidursäure, der Tris(perfluorsulfonyl)methan)säure, den Perfluorcarboxylsäuren, den Arylsulfonsäuren, den Perfluorsulfonimidsäuren und den Arylsulfonimiden und aus den Salzen der Säuren ausgewählt ist.

12. Ionenleitendes Material nach Anspruch 1, **dadurch gekennzeichnet, dass** es ferner ein elektronisch leitendes Material und ein Insertionsmaterial enthält.

13. Ionenleitendes Material nach Anspruch 12, **dadurch gekennzeichnet, dass** das elektronisch leitende Material ausgewählt ist aus:
- dem Kohlenstoff in Form von Gewebe oder Pulver,
- den intrinsischen elektronisch leitenden Polymeren,
- den Gemischen eines intrinsischen elektronisch leitenden Polymers mit Acetylenruß,
- den Polymeren mit gemischter Leitung, das heißt, ionischer und elektronischer, allein oder mit Kohlenstoff verwendet.

14. Ionenleitendes Material nach Anspruch 12, **dadurch gekennzeichnet, dass** das Insertionsmaterial ein Oxid eines Metalls, das aus dem Kobalt, dem Nickel, dem Mangan, dem Vanadium und dem Titan ausgewählt ist, oder ein Eisenphosphat oder eine graphitische Verbindung ist.

15. Elektrode für Batterie, gebildet aus einem Verbundmaterial, **dadurch gekennzeichnet, dass** das Verbundmaterial ein Material nach einem der Ansprüche 12 bis 14 ist.

16. Ionenleitendes Material nach Anspruch 1, **dadurch gekennzeichnet, dass** es ferner ein elektronisch leitendes Material und einen aktiven Stoff enthält, der als Katalysator wirkt.

17. Ionenleitendes Material nach Anspruch 16, **dadurch gekennzeichnet, dass** das elektronisch leitende Material ausgewählt ist aus:
- dem Kohlenstoff in Form von Gewebe oder Pulver,
- den intrinsischen elektronisch leitenden Polymeren,
- den Gemischen eines intrinsischen elektronisch leitenden Polymers mit Acetylenruß,
- den Polymeren mit gemischter Leitung, das heißt, ionischer und elektronischer, allein oder mit Kohlenstoff verwendet.

18. Ionenleitendes Material nach Anspruch 16, **dadurch gekennzeichnet, dass** der aktive Stoff das Platin oder eine Platinlegierung ist.

19. Elektrode für Brennstoffzelle, die von einem Verbundmaterial gebildet ist, **dadurch gekennzeichnet, dass** das Verbundmaterial ein Material nach einem der Ansprüche 16 bis 18 ist.

20. Elektrolyt für eine Lithium-Polymer-Batterie, deren negative Elektrode von metallischem Lithium gebildet ist, **dadurch gekennzeichnet, dass** er von einem Material nach Anspruch 1 gebildet ist.

21. Elektrolyt für eine Lithium-Polymer-Batterie nach Anspruch 20, **dadurch gekennzeichnet, dass** die Polymermatrix des ionenleitenden Materials von einem amorphen eindimensionalen Copolymer oder von einem amorphen dreidimensionalen Polyethernetz gebildet ist.

22. Elektrolyt für eine Lithium-Polymer-Batterie, deren negative Elektrode von lithiiertem Graphit gebildet ist, **dadurch gekennzeichnet, dass** er von einem Material nach Anspruch 1 gebildet ist.

23. Elektrolyt für eine Lithium-Polymer-Batterie nach Anspruch 22, **dadurch gekennzeichnet, dass** die Polymermatrix des ionenleitenden Materials ein Homo- oder ein Copolymer von Vinyliden-, Acrylnitril-, Methacrylnitril-, Alkylacrylat-, Alkylmethacrylat- oder Ethylenoxydfluorid ist.

24. Elektrolyt einer Membran-Brennstoffzelle, **dadurch gekennzeichnet, dass** er von einem ionenleitenden Material nach Anspruch 1 gebildet ist.

25. Elektrolyt einer Brennstoffzelle nach Anspruch 24, **dadurch gekennzeichnet, dass** die Polymermatrix von einem nicht solvatierenden Polymer, polar oder nicht, gebildet ist, das saure Ionengruppen trägt.

26. Elektrolyt einer Brennstoffzelle nach Anspruch 24, **dadurch gekennzeichnet, dass** das Polymer Alkylsulfongruppen oder Arylsulfongruppen oder Perfluorsulfongruppen trägt.

27. Solarzelle, die eine Photoanode und eine durch einen Elektrolyt separierte Kathode umfasst, wobei die Photoanode ein leitendes Glas trägt, **dadurch gekennzeichnet, dass** der Elektrolyt ein ionenleitendes Material nach Anspruch 1 ist.

28. Superkondensator, der von einer elektrochemischen Zelle gebildet ist, die zwei durch einen Elektrolyt separierte Elektroden umfasst, **dadurch gekennzeichnet, dass** der Elektrolyt ein ionenleitendes Material nach Anspruch 1 ist, wobei die ionische Verbindung ein Lithium- oder Tetraalkylammoniumsalz oder eine Säure ist.

29. Elektrochrome Verglasung, umfassend zwei durch einen Elektrolyt separierte Elektroden, **dadurch gekennzeichnet, dass** der Elektrolyt ein ionenleitendes Material nach Anspruch 1 ist, wobei die ionische Verbindung eine Säure ist.

## Claims

1. An ionic conduction material comprising a polymer matrix, at least one ionic species and at least one reinforcing agent, **characterized in that**:
- the polymer matrix is:
- a solvating polymer optionally having a polar character selected from:
- homopolymers of the polyether type, selected from poly(oxyethylenes), poly(oxypropylenes), poly(oxytrimethylenes), poly(oxytetramethylenes) and poly-(oxymethylene)(oxyethylenes), said homopolymers having a linear structure, a comb structure, a star structure or a dendrimer structure;
- block copolymers or grafted copolymers of the polyether type, forming or not forming a network;
- statistical, random or alternating copolymers containing recurrent oxyalkylene units, forming or not forming a network;
- polyphosphazenes and polysiloxanes carrying oligoether branches;
- linear polycondensates prepared by a Williamson reaction between polyethylene glycols and dichloromethane;
- networks of polyethylene glycol which is crosslinked by isocyanates, or the networks obtained by preparation from polycondensates carrying crosslinkable groups selected from double and triple bonds; and
- the networks prepared by reacting polyethylene glycol modified by terminal amine functions and isocyanates.
- a non-solvating polymer carrying acidic ionic groups selected from alkylsulfonic groups, arylsulfonic groups, perfluorosulfonic groups and perfluorocarboxylic groups, or
- a mixture of a solvating or non-solvating polymer and an aprotic polar liquid;
- the ionic species is either an ionic compound selected from salts and acids, said compound being in solution in the polymer matrix, or an anionic or cationic ionic group fixed by covalent bonding on the polymer, or a combination of the two;
- the reinforcing agent is a cellulosic material consisting of cellulose single crystals or of cellulose microfibrils.

2. The ionic conduction material as claimed in claim 1, **characterized in that** the proportion of reinforcing agent is between 0.5% and 70% by weight.

3. The ionic conduction material as claimed in claim 2, **characterized in that** the proportion of reinforcing agent is between 1% and 10% by weight.

4. The ionic conduction material as claimed in claim 1, **characterized in that** the polymer matrix consists of a crosslinked or non-crosslinked solvating polymer.

5. The ionic conduction material as claimed in claim 4, **characterized in that** the solvating polymer carries grafted ionic groups.

6. The ionic conduction material as claimed in claim 1, **characterized in that** the polymer matrix consists of a non-solvating polymer carrying acidic ionic groups.

7. The ionic conduction material as claimed in claim 1, **characterized in that** the polymer matrix consists of a mixture of solvating or non-solvating polymer and at least one aprotic polar liquid.

8. The ionic conduction material as claimed in claim 7, **characterized in that** the aprotic polar liquid is selected from linear ethers and cyclic ethers, linear acetals and cyclic acetals, linear carbonates and cyclic carbonates, esters, nitriles, nitrated derivatives, amides, sulfones, sulfolanes, alkylsulfamides and partially halogenated hydrocarbons.

9. The ionic conduction material as claimed in claim 7, **characterized in that** the polymer is a non-solvating polymer selected from polymers which have polar groups and which comprise units containing at least one heteroatom selected from sulfur, nitrogen, oxygen, phosphorus, boron, chlorine and fluorine.

10. The ionic conduction material as claimed in claim 1, **characterized in that** the ionic compound is selected from strong acids and from salts of alkali metals, alkaline-earth metals, transition metals, rare earths, organic cations and organometallic cations of said acids.

11. The ionic conduction material as claimed in claim 10, **characterized in that** the ionic compound is selected from perchloric acid, phosphoric acid, perfluorosulfonic acids, trifluorosulfonylimide acid, tris(perfluorosulfonyl)methane acid, perfluorocarboxylic acids, arylsulfonic acids, perfluorosulfonimides and arylsulfonimides, and from salts of said acids.

12. The ionic conduction material as claimed in claim 1, **characterized in that** it furthermore contains an electronically conductive material and an insertion material.

13. The ionic conduction material as claimed in claim 12, **characterized in that** the electronically conductive material is selected from:
- carbon in the form of a fabric or powder,
- intrinsic electronically conductive polymers,
- mixtures of an intrinsic electronically conductive polymer and acetylene black,
- polymers with hybrid conduction, that is to say ionic and electronic, used on their own or with carbon.

14. The ionic conduction material as claimed in claim 12, **characterized in that** the insertion material is an oxide of a metal selected from cobalt, nickel, manganese, vanadium and titanium, or an iron phosphate or a graphitic compound.

15. An electrode for a battery, consisting of a composite material, **characterized in that** the composite material is a material as claimed in one of claims 12 to 14.

16. The ionic conduction material as claimed in claim 1, **characterized in that** it furthermore contains an electronically conductive material and an active material performing as a catalyst.

17. The ionic conduction material as claimed in claim 16, **characterized in that** the electronically conductive material is selected from:
- carbon in the form of a fabric or powder,
- intrinsic electronically conductive polymers,
- mixtures of an intrinsic electronically conductive polymer and acetylene black,
- polymers with hybrid conduction, that is to say ionic and electronic, used on their own or with carbon.

18. The ionic conduction material as claimed in claim 16, **characterized in that** the active material is platinum or a platinum alloy.

19. An electrode for a fuel cell, consisting of a composite material, **characterized in that** the composite material is a material as claimed in one of claims 16 to 18.

20. An electrolyte for a lithium-polymer battery, in which the negative electrode consists of metallic lithium, **characterized in that** it consists of a material as claimed in claim 1.

21. The electrolyte for a lithium-polymer battery as claimed in claim 20, **characterized in that** the polymer matrix of the ionic conduction material consists of an amorphous one-dimensional copolymer or of an amorphous three-dimensional polyether network.

22. An electrolyte for a lithium-polymer battery, in which the negative electrode consists of lithiated graphite, **characterized in that** it consists of a material as claimed in claim 1.

23. The electrolyte for a lithium-polymer battery as claimed in claim 22, **characterized in that** the matrix of the ionic conduction polymer is a homo- or copolymer of vinylidene fluoride, acrylonitrile, methacrylonitrile, alkyl acrylate, alkyl methacrylate or ethylene oxide.

24. An electrolyte of a membrane fuel cell, **characterized in that** it consists of an ionic conduction material as claimed in claim 1.

25. The fuel cell electrolyte as claimed in claim 24, **characterized in that** the polymer matrix consists of a non-solvating, polar or non-polar polymer carrying acidic ionic groups.

26. The fuel cell electrolyte as claimed in claim 24, **characterized in that** the polymer carries alkylsulfonic groups or arylsulfonic groups or perfluorosulfonic groups.

27. A solar cell comprising a photoanode and a cathode separated by electrolyte, the photoanode carrying a conductive glass, **characterized in that** the electrolyte is an ionic conduction material as claimed in claim 1.

28. A supercapacitor consisting of an electrochemical cell comprising two electrodes separated by an electrolyte, **characterized in that** the electrolyte is an ionic conduction material as claimed in claim 1 in which the ionic compound is a lithium or tetraalkylammonium salt, or an acid.

29. Electrochromic glazing comprising two electrodes separated by an electrolyte, **characterized in that** the electrolyte is an ionic conduction material as claimed in claim 1 in which the ionic compound is an acid.
